# EUROPEAN PATENT SPECIFICATION

(11) **EP 2 091 057 B1**
(45) Date of publication and mention of the grant of the patent: **29.04.2015**
(21) Application number: 09150916.6
(22) Date of filing: 20.01.2009
(51) Int. Cl.: H01H 31/00, H02B 13/035, H02B 13/075

(54) **Gas-insulated switchgear and assembly method thereof**
Gasisolierte Schaltanlage und Montageverfahren dafür
Appareillage de commutation à isolation gazeuse et son procédé d'assemblage

(30) Priority: 15.02.2008 JP 2008034781
(43) Date of publication of application: 19.08.2009
(73) Proprietor: Kabushiki Kaisha Toshiba, Minato-ku, Tokyo 105-8001 (JP)
(72) Inventor: Mukaida, Akihisa c/o Kabushiki Kaisha Toshiba, Tokyo 105-8001 (JP)
(74) Representative: Hoffmann Eitle

(56) References cited:
- EP-A- 0 824 264
- EP-B- 1 082 791
- WO-A-2006/131560
- DE-U1- 29 823 222
- JP-A- 2000 134 733
- JP-A- 2005 057 831
- US-A1- 2007 158 311

## Description

### BACKGROUND OF THE INVENTION

### 1. FIELD OF THE INVENTION

The present invention relates to a gas-insulated switchgear used in an electric power station such as a generating station or a substation, and in particular, relates toagas-insulated switchgear in which a three-position disconnector switch/earthing switch having three positions of ON, OFF and grounding is miniaturized and an assembly property is improved, and an assembly method thereof.

### 2. DESCRIPTION OF THE RELATED ART

In an electric power station such as a substation or a switching station which is established in a neighborhood of a large city or in a seaside district, as electric equipment constituting the substation or the switching station, there is used a gas-insulated switchgear housing openable/closable electric devices such as a circuit breaker and a disconnector switch in a container in which an insulating medium superior in an insulation property and an extinction property, such as SF6 gas, is filled and sealed, due to a reason of difficulty of land acquisition and measures against salt damage.

In a gas-insulated switchgear, by three-dimensionally disposing a circuit breaker, a disconnector switch or other necessary devices, intervals between respective devices can be made narrower and a site area can be reduced. Accordingly, the gas-insulated switchgear can be constructed substantially smaller compared with an air-insulated switchgear.

Further, electric devices are increasingly constructed in a building or in a basement in large cities, in consideration of environmental harmony between an electric power station and surrounding nature or residential zone. In the circumstances, development is promoted so that respective electric devices are rationally disposed to further reduce an installation area and volume.

For example, in JP-A 2000-134733 (KOKAI) and JP-A 10-188746 (KOKAI), there are developed gas-insulated switchgears which are constructed so that one drive shaft each can drive a movable contactor common to a disconnector switch and an earthing switch, as examples to reduce installation areas and volumes.

In the gas-insulated switchgear described in JP-A 2000-134733 (KOKAI), the common movable contactor which slides on and fittingly contacts fixed contact portions of the disconnector switch and the earthing switch that are housed in a gas container is disposed parallel in relation to a bus-bar conductor, and a portion of the bus-bar conductor facing the movable contactor is disposed to be substantially off-centered in relation to a center axis of the gas container. In other words, a center axis of the portion of the bus-bar conductor facing the movable contactor is disposed to be substantially off-centered in relation to the center axis of the gas container.

Thus, in the gas-insulated switchgear described in JP-A 2000-134733 (KOKAI), an insulation spacer supporting the bus-bar conductor needs to be mounted in a manner to be substantially off-centered in relation to the center axis of the gas container. As a result, an outside diameter of the gas container is required to be larger compared with an outside diameter of the insulation spacer.

The gas-insulated switchgear described in JP-A 10-188746 (KOKAI) is constructed so that the movable contactor is disposed with a predetermined angle in relation to an axis direction of the bus-bar conductor, not parallel to the axis direction of the bus-bar conductor. In such a construction, since an outer diameter of a main bus-bar portion of the gas container can be the same as an outer diameter of an insulation spacer, there is an advantage that the gas container can be constructed smaller compared with the gas-insulated switchgear described in JP-A 2000-134733 (KOKAI). However, the movable contactor and a fixed contactor of the disconnector switch or the earthing switch are not perpendicular in relation to a fixed conductor portion of the insulation spacer, and so an adjustment operation of centering at a time of assembling is difficult.

It is also disclosed a gas-insulated switchgear in which movable contactors are independently provided for a disconnector switch and an earthing switch instead of a common movable contactor, and each movable contactor is driven by separate Geneva mechanisms, for example, in JP-A 11-355926 (KOKAI).

The gas-insulated switchgear described in JP-A 11-355926 (KOKAI) has a position holding function to allow intermittent actions and to hold a movable contactor position, so that an assembly property is improved compared with the invention described in JP-A 2000-134733 (KOKAI). However, there is a disadvantage that an outer diameter of the gas container is larger compared with an outer diameter of an insulation spacer.

As described above, in cases of the conventional gas-insulated switchgears described in JP-A 2000-134733 (KOKAI) and JP-A 11-355926 (KOKAI), there is a problem that miniaturization of the device is difficult since the outer diameters of the gas containers are required to be larger compared with the outer diameters of the insulation spacers. Meanwhile, in a case of the conventional gas-insulated switchgear described in JP-A 10-188746 (KOKAI), there is a problem that the assembly property is deteriorated when a disposition of devices in the container is altered in order to reduce the outer diameter of the gas container.

WO 2006/131560 A1 pertains to an electric switch having an annular stationary contact.

US 2007/0158311 A1 relates to a three-position ground switch.

DE 298 23 222 U1 pertains to a gas-isolated, three-phase encapsulated switching gear.

### BRIEF SUMMARY OF THE INVENTION

In the circumstances, an object of the present invention is to provide a gas-insulated switchgear capable of miniaturizing a device and also improving an assembly property, and an assembly method thereof.

According to an aspect of the present invention, there is provided a gas-insulated switchgear housing a main bus-bar conductor and accommodating a three-position disconnector switch/earthing switch including a disconnector switch fixed contact portion, an earthing switch fixed contact portion, a movable contactor supporting conductor disposed between both the contact portions; and a movable contactor slidably supported by the movable contactor supporting conductor to be connected or separated to/from both the contact portions, in a gas container towhich insulation gas is filled, wherein the gas container houses the main bus-bar conductor and has two facing openings in a longitudinal direction of the main bus-bar conductor and at least one opening in a direction almost orthogonal to the longitudinal direction of the main bus-bar conductor, wherein a disconnector switch fixed side unit is mounted to one of the two facing openings provided in the gas container, the disconnector switch fixed side unit having a first insulation spacer and the main bus-bar conductor whose one end is fixed to the first insulation spacer, in a center portion of the main bus-bar conductor, the disconnector switch fixed contact portion in a direction orthogonal to the longitudinal direction of the main bus-bar conductor being formed, and in the other end portion of the main bus-bar conductor a connection portion to another conductor being formed, wherein an earthing switch fixed side unit is mounted to a mounting surface side of the disconnector switch fixed side unit of the gas container, the earthing switch fixed side unit having the earthing switch fixed contact portion and an external lead-out terminal to connect the earthing switch fixed contact portion to the outside, wherein a movable contactor supporting unit is mounted to the opening provided in a direction almost orthogonal to the longitudinal direction of the main bus-bar conductor of the gas container, the movable contactor supporting unit having a second insulation spacer, the movable contactor supporting conductor fixed to the second insulation spacer and disposed to face the disconnector switch fixed contact portion, and the movable contactor slidably supported by the movable contactor supporting conductor to be connected or separated to/from either one of the disconnector switch fixed contact portion and the earthing switch fixed contact portion, and wherein a detachable unit is mounted to the other opening facing the disconnector switch fixed side unit of the gas container, the detachable unit having a third insulation spacer mounted to be able to move forward and backward in an internal direction of the gas container, and a detachable conductor fixed to the third insulation spacer and connectable or separatable to/from the connection portion formed in the other end portion of the main bus-bar conductor.

Further, according to an aspect of the present invention, there is provided an assembly method of a gas-insulated switchgear having a gas container which accommodates a three-position disconnector switch/earthing switch constituted with a main bus-bar conductor, a disconnector switch fixed contact portion, an earthing switch fixed contact portion, a movable contactor supporting conductor disposed between both the contact portions, and a movable contactor slidably supported by the movable contactor supporting conductor to be connected or separated to/from both the contact portions, the gas container having two facing openings in a longitudinal direction of the main bus-bar conductor and at least one opening in a direction almost orthogonal to a longitudinal direction of the main bus-bar conductor, and insulation gas being filled to the gas container, the assembly method including a disconnector switch fixed side unit mounting in which a disconnector switch fixed side unit is mounted to one of two facing openings provided in the gas container, the disconnector switch fixed side unit having a first insulation spacer and a main bus-bar conductor whose one end is fixed to the first insulation spacer, in a center portion of the main bus-bar conductor, the disconnector switch fixed contact portion in a direction orthogonal to the longitudinal direction of the main bus-bar conductor being formed, and in the other end portion of the main bus-bar conductor a connection portion to another conductor being formed; an earthing switch fixed side unit mounting in which an earthing switch fixed side unit is mounted to a mounting surface side of the disconnector switch fixed side unit of the gas container, the earthing switch fixed side unit having the earthing switch fixed contact portion and an external lead-out terminal to connect the earthing switch fixed contact portion to the outside; a movable contactor supporting unit mounting in which a movable contactor supporting unit is mounted to the opening provided in the direction almost orthogonal to the longitudinal direction of the main bus-bar conductor of the gas container, the movable contactor supporting unit having a second insulation spacer, the movable contactor supporting conductor fixed to the second insulation spacer and disposed to face the disconnector switch fixed contact portion, and the movable contactor slidably supported by the movable contactor supporting conductor to be connected or separated to/from either one of the disconnector switch fixed contact portion and the earthing switch fixed contact portion; and a detachable unit mounting in which a detachable unit is mounted to the other opening facing the disconnector switch fixed side unit of the gas container, the detachable unit having a third insulation spacer mounted to be able to move forward and backward in an internal direction of the gas container and a detachable conductor fixed to the third insulation spacer and is connectable or separatable to/from the connection portion formed in the other end portion of the main bus-bar conductor.

### BRIEF DESCRIPTION OF THE DRAWINGS

The present invention will be described with reference to the drawings, but those drawings are provided only for the purpose of illustration and are not intended to limit the invention in any way.

FIG. 1A is a view of a cross-section as seen from a side surface at a time that a disconnector switch and an earthing switch for gas-insulated switchgear according to the present invention are both in OFF positions.

FIG. 1B is a view of a cross-section as seen from a top surface at a time that the disconnector switch and the earthing switch for gas-insulated switchgear according to the present invention are both in OFF positions.

FIG. 2 is a view of a cross-section as seen from a side surface at a time that the disconnector switch for gas-insulated switchgear according to the present invention is in an ON position and the earthing switch is in the OFF position.

FIG. 3 is a view of a cross-section as seen from a side surface at a time that the disconnector switch for gas-insulated switchgear according to the present invention is in the OFF position and the earthing switch is in an ON position.

FIG. 4 is an enlarged cross-sectional view showing an example of a detachable unit.

### DETAILED DESCRIPTION OF THE INVENTION

Hereinafter, an embodiment of the present invention will be described with reference to the drawings.

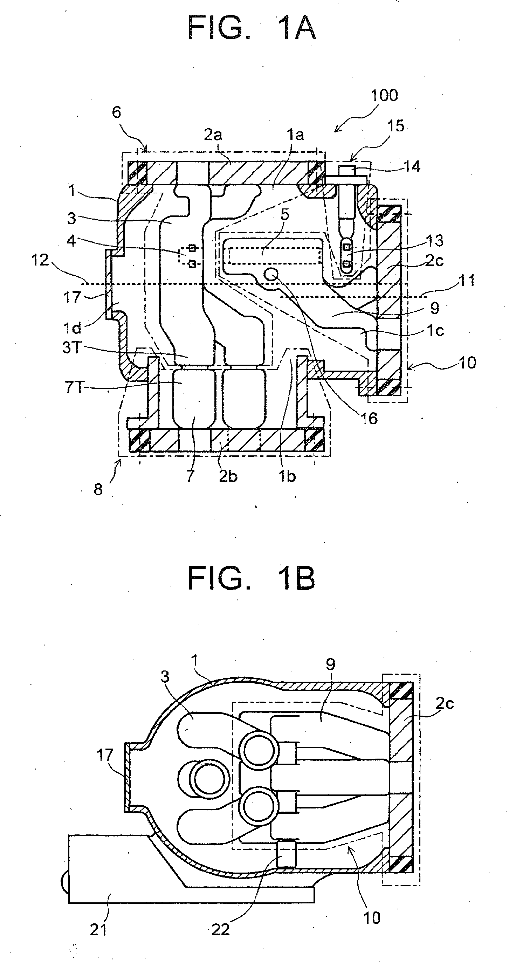

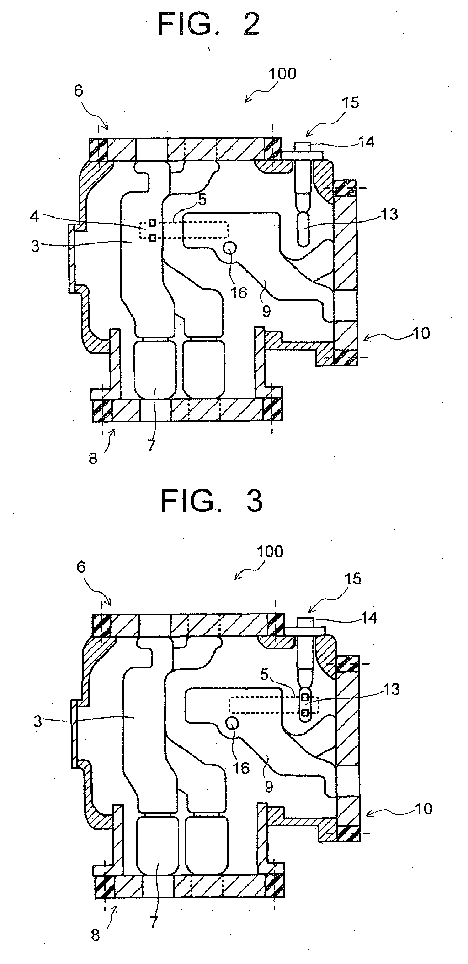

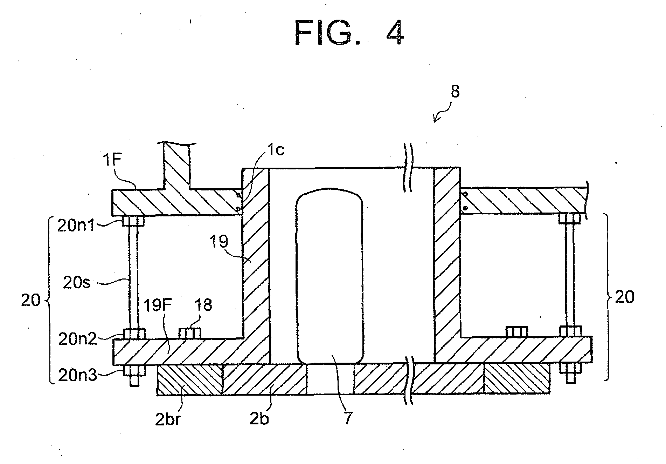

FIG. 1A to FIG. 4 are constructional views of a disconnector switch/earthing switch of a three-phase collective type gas-insulated switchgear according to the present invention. Among these, FIG. 1A and FIG. 1B illustrate views of cross-sections as seen from a side surface and a top surface at a time that disconnector switch and an earthing switch of the disconnector switch/earthing switch are both in OFF positions, respectively. FIG. 2 illustrates a view of a cross-section as seen from a side surface at a time that the disconnector switch is in an ON position and the earthing switch is in the OFF position, while FIG. 3 illustrates a view of a cross-section as seen from a side surface at a time that the disconnector switch is in the OFF position and the earthing switch is in an ON position. Further, FIG. 4 is a cross-sectional view showing, in enlargement, part of a detachable unit in FIG. 1A to FIG. 3.

### (Construction)

First, a construction will be described with reference to FIG. 1A, FIG. 1B and FIG. 4. A reference numeral "100" indicates an entire three position disconnector switch/earthing switch for gas insulated switchgear.

A reference numeral "1" indicates a gas container housing a disconnector switch, a switch and other electric components therein and filling and sealing an insulating medium such as SF6 gas. As is shown in the drawing, openings 1a, 1b, 1c and 1d are provided in upper and lower parts as well as right and left parts of the gas container respectively. Each of the openings 1a, 1b, 1c and 1d can be sealed airtight by an insulation spacer or a cover, as will be described later.

Among the openings of the gas container 1, to the opening 1a of the upper part, an insulation spacer 2a can be mounted airtight by a fixing means such as a bolt. One end portion of a main bus-bar conductor 3 of three-phase construction is fixed to the insulation spacer 2a in advance. Further, the main bus-bar conductor 3 is accommodated in the gas container 1 in a state that the insulation spacer 2a is mounted to the gas container 1.

A fixed contact portion (hereinafter, referred to as a disconnector switch fixed contact portion) 4 of the disconnector switch is bored in a position of a center portion in a longitudinal direction of the main bus-bar contactor 3, the position also being perpendicular (right-angled) to an axis connecting the right and left openings 1c, 1d of the gas container 1. A later-described movable contactor (hereinafter, referred to as a movable contactor) 5 used commonly by the disconnector switch and the earthing switch is disposed to be connectable or separatable to/from the disconnector switch fixed contact portion 4. It should be noted that in the present embodiment a portion enclosed by a dashed line, the portion being constituted with the insulation spacer 2a, the main bus-bar conductor 3 and the disconnector switch fixed contact portion 4, is referred to as a disconnector switch fixed side unit 6 for convenience sake.

Further, the other end portion, that is, a lower end portion 3T of the main bus-bar conductor 3 is constructed to be connectable or separatable to/from an upper end portion 7T of a detachable conductor 7 having been fixed in advance to an insulation spacer 2b fixed airtight to the opening 1b of the lower part of the gas container 1. It should be noted that the detachable conductor 7 is a component of a detachable unit 8 which will be described later.

Meanwhile, to the opening 1c shown in a right side of the gas container 1, an insulation spacer 2c can be mounted airtight. To the insulation spacer 2c, there is fixed in advance a movable contactor supporting conductor 9 disposed with a predetermined insulation distance apart from the disconnector switch fixed contact portion 4 bored in the main bus-bar conductor 3.

The movable contactor supporting conductor 9 is constructed to slidably store and support by a cylindrical portion the movable contactor 5 to be fitted to the disconnector switch fixed contact portion 4 and electrically connected thereto. It should be noted that in the present embodiment a portion enclosed by a dashed line, the portion being constituted with the insulation spacer 2c, the movable contactor 5 and the movable contactor supporting conductor 9, is referred to as a movable contactor supporting unit 10 for convenience sake. A center axis 11 of the insulation spacer 2c is disposed to be off-centered toward a side of the detachable unit 8 positioned in the lower part of the drawing as seen from a center axis of the gas container 1.

In a space portion formed between the movable contactor supporting conductor 9 and the insulation spacer 2c in the gas container 1, that is, a space portion formed in a back side of the movable contactor 5 as seen from the disconnector switch fixed contact portion 4, there is disposed a fixed contact portion (hereinafter, referred to as an earthing switch fixed contact portion 13) of the earthing switch on the same axis as an axis between the disconnector switch fixed contact portion 4 and the movable contactor 5.

An external lead-out terminal 14 doubles as a supporting member of the earthing switch fixed contact portion 13 is mounted to a mounting surface being a surface flat with the opening 1a of the gas container 1. The earthing switch fixed contact portion 13 is to be grounded via the external lead-out terminal 14 doubling the supporting member. It should be noted that in the present embodiment a portion enclosed by a dashed line, the portion being constituted with the earthing switch fixed contact portion 13 and the external lead-out terminal 14, is referred to as an earthing switch fixed side unit 15 for convenience sake.

For example, by converting a rotary movement of a driving shaft 16 to a linear movement with a rack-and-pinion steering, a linkage lever or the like, the movable contactor 5 is linearly driven to be connected or separated to/from the disconnector switch fixed contact portion 4 and the earthing switch fixed contact portion 13.

A reference numeral "21" shown in FIG. 1B indicates an operational device to rotate-drive the driving shaft 16 via an insulation rod 22. A reference numeral "17" indicates an inspection cover to airtightly seal the opening 1d of a left side of the gas container 1.

Next, the detachable unit 8 will be described with reference to FIG. 4. The detachable unit 8 is a unit to connect or separate an upper end portion 7T of the detachable conductor 7 to/from the lower end portion 3T of the main bus-bar conductor 3. The detachable unit 8 is constituted with components described below.

The detachable unit 8 is constituted with an insulation spacer 2b, the detachable conductor 7 of each phase of three phases each having been fixed in advance to a predetermined position of the insulation spacer 2b, and a cylinder 19 which has a flange 19F fixed by a bolt 18 to a metal mounting ring 2br provided in an outer periphery portion of the insulation spacer 2b and which is airtightly and slidably fitted to an inner periphery portion of the opening 1b of the lower part of the gas container 1 via a seal member, and an attaching/detaching means 20 provided between the flange 19F of the cylinder 19 and a container flange 1F formed around the opening 1b of the lower part of the gas container.

The attaching/detaching means 20 is constituted with a stud 20s having one end portion of which is screwed to a lower surface of the container flange 1F, a nut 20n1 fixing the stud 20s in a state being upright in a forward and backward direction of the cylinder 19, and nuts 20n2, 20n3 disposed on both sides of a through hole opened in the flange 19F of the cylinder 19 and screwed with the stud 20s. As for the attaching/detaching means 20, when the nut 20n3 is screwed forward in a state that the nut 20n2 is loosened, the detachable conductor 7 moves toward the lower end portion 3T of the main bus-bar conductor 3 together with the cylinder 19 and the insulation spacer 2b. Then, the detachable conductor 7 is connected to the lower end portion 3T of the main bus-bar conductor 3 eventually. When the nut 20n2 is fastened in such a state and pressed hard to the flange 19F, a connected state between the main bus-bar conductor 3 and the detachable conductor 7 is maintained.

Next, assembly of the three-position disconnector switch/earthing switch 100 and an operation of the three-position disconnector switch/earthing switch will be described with reference to FIG. 1A to FIG. 4.

### (1) Assembling Process

(i) First, the insulation spacer 2a of the disconnector switch fixed side unit 6 is mounted airtight to the opening 1a of the upper part of the gas container 1a, whereby the main bus-bar conductor 3 in which the disconnector switch fixed contact portion 4 is bored is housed in the gas container 1.

(ii) Next, the earthing switch fixed side unit 15 is mounted airtight to the mounting surface being the surface flat with the opening 1a of upper part of the gas container 1, whereby the earthing switch fixed contact portion 13 provided in a tip portion of the earthing switch fixed side unit 15 is housed in the gas container 1. It should be noted that each one of the process (i) and the process (ii) can precede the other.

(iii) Thereafter, the insulation spacer 2c of the movable contactor supporting unit 10 is mounted to the opening 1c of the right side part of the gas container 1, whereby the movable contactor 5 supported by the movable contactor supporting conductor 9 is disposed between the disconnector switch fixed contact portion 4 and the earthing switch fixed side unit 15 with predetermined insulation distances apart each.

(iv) At a stage that the above-described process (iii) is finished, the detachable unit 8 is not mounted to the opening 1b of the lower part of the gas container 1 yet. Thus, a state inside the gas container 1 can be seen from the opening 1b of the lower part and a jig can also be inserted.

Thus, after the process (iii) is finished, a centering adjustment operation is performed by the jig or viewing from the opening 1b of the lower part so that axes of the disconnector switch fixed contact portion 4, the movable contactor 5 and the earthing switch fixed contact portion 13 are disposed in alignment with one another.

(v) After the operation of centering adjustment in the above-described process (iv), the detachable unit 8 is mounted to the lower part of the gas container 1 and an upper terminal of the detachable conductor 7 is connected to a lower terminal of the main bus-bar conductor 3. In the above operation, first, the cylinder 19 is fitted to the opening 1b of the lower part of the gas container 1. Then, while the stud 20s fixed to be upright around the opening 1b of the lower part is in a state of being through the through hole provided in the flange 19F of the cylinder 19, the nut 20n2 is loosen. Subsequently, the nut 20n3 is turned in a screw forward direction, whereby the cylinder 19 is pushed up from below and the detachable conductor 7 fixed to the insulation spacer 2b is pushed forward in an internal direction of the gas container 1.

Then, when the upper end portion 7T of the detachable conductor 7 becomes in a state of being connected to the lower end portion 3T of the main bus-bar conductor 3 with an adequate pressure, the nut 20n2 is turned in a reverse direction to strongly press the stud 20s to the flange 19F, so that a fixed state of the detachable unit 8 to the gas container lower part is maintained. Hereby, the assembly of the three-position disconnector switch/earthing switch 100 of the gas-insulated switchgear is completed.

### (2) Operation of Three-position Disconnector Switch/Earthing Switch

FIG. 1A shows a state that the three-position disconnector switch/earthing switch is in the OFF state. In other words, the movable contactor 5 is housed in the movable contactor supporting conductor 9 of the movable contactor supporting unit 10, and in a state of not being connected to either the disconnector switch fixed contact portion 4 or the earthing switch fixed contact portion 13, that is, in a state of "disconnector switch OFF" and "earthing switch OFF".

In the above state, when the operational device 21 is operated for "disconnector switch ON" by a motor action by remote control or a direct handle operation, a rotational force from the operational device 21 is transmitted to a converting means converting a rotary movement of a rack-and-pinion steering, a linkage lever or the like to a linear movement, via the insulation rod 22 and the driving shaft 16 in the gas container 1. Then, by this converting means, the rotary movement is converted to the linear movement and a driving force is transmitted to the three-phase movable contactor 5.

By the above driving force, the movable contactor 5 is moved from the position in FIG. 1A to a main bus-bar conductor 3 side and stops at a position in FIG. 2, in which the movable contactor 5 is connected to the disconnector switch fixed contact portion 4. A state in FIG. 2 is a state of "disconnector switch ON" and "earthing switch OFF".

On the other hand, when the operational device 21 is operated for "earthing switch ON", the movable contactor 5 is moved to the opposite side of the main bus-bar conductor 2, that is, to an earthing switch fixed contactor 13 side, and stops at a position in FIG. 3, in which the movable contactor 5 is connected to the earthing switch fixed contact portion 13. A state in FIG. 3 is a state of "disconnector switch OFF" and "earthing switch ON".

### (Effect)

As described above, according to the present embodiment, effects described below can be attained.

(i) The movable contactor 5 used by both the disconnector switch and the earthing switch is disposed to be almost orthogonal to the main bus-bar conductor 3 and the earthing switch fixed contact portion 13 is disposed behind the movable contactor 5 in a manner that the axes of the movable contactor 5 and the earthing switch fixed contact portion 13 become aligned as seen from the disconnector switch fixed contact portion 4, and there is disposed the detachable unit 8 having the detachable conductor 7 to be connected or separated to/from the lower end portion 3T of the main bus-bar conductor 3, and further, the center axis 11 of the insulation spacer 2c of the movable contactor supporting unit 10 supporting the movable contactor 5 is disposed to be off-centered toward the detachable unit 8 side as seen from the center axis 12 of the gas container 1. As a result, miniaturization and the assembly property of the three-position disconnector switch/earthing switch can be improved.

(ii) Further, it is constructed so that the movable contactor supporting unit 10 is inserted to the gas container 1 and assembled after the disconnector switch fixed side unit 6 and the earthing switch fixed side unit 15 are assembled in the gas container 1. As a result, it is possible to improve the centering adjustment operation to dispose the axes of the disconnector switch fixed side unit 6, the earthing switch fixed side unit 15 and the movable contactor 5 aligned with one another from the opening 1b of the lower part of the gas container 1.

(iii) Further, it is disposed so that the mounting surface of the disconnector switch fixed side unit 6 of the gas container 1 and the mounting surface of the earthing switch fixed side unit 15 of the gas container 1 become the same mounting surface. As a result, it is possible to improve the centering adjustment operation to dispose the disconnector switch fixed side unit 6, the earthing switch fixed side unit 15 and the movable contactor 5 aligned with one another. It should be noted even if there is a level difference between the mounting surface of the disconnector switch fixed side unit 6 and the mounting surface of the earthing switch fixed side unit 15, a similar effect can be attained as long as both the mounting surfaces are almost parallel to each other.

(iv) Furthermore, since the detachable unit 8 is disposed in the opposite side of the earthing switch fixed side unit 15, the earthing switch fixed side unit 15 is not in a neighborhood. As a result a local assembling space of the detachable unit 8 side can be secured, improving the assembling property.

(v) Since the opening 1b of the gas container 1, the opening 1b being the mounting surface of the detachable unit 8, is used at a time of internal assembling, it is not required to provide the gas container 1 with an unnecessary assembling hole. Therefore, it becomes possible to construct the gas container 1 without reducing strength of the container 1. Thereby, reliability of the device is improved and the centering adjustment operation of the three-position disconnector switch/earthing switch 100 by a jig or viewing can be improved.

Further, a structure is adopted that the detachable conductor 7 is slidably fit to the gas container 1 via the insulation spacer 2b and the cylinder 19 to seal the gas. As a result, in intercircuit unit connection at a local mounting location of the gas-insulated switchgear, a connection operation to other equipment can be easily done by extending/retracting the detachable conductor 7 in the longitudinal direction of the main bus-bar conductor 3.

(vi) Further, since it is constructed so that an operational ground terminal is drew out per phase, an effect of improved workability at a time of inspection of the gas-insulated switchgear can be also attained in a three-position disconnector switch/earthing switch 100 which is constituted small-sized.

## Claims

1. A gas-insulated switchgear (100) housing a main bus-bar conductor (3) and accommodating a three-position disconnector switch/earthing switch, comprising:
a disconnector switch fixed contact portion (4);
an earthing switch fixed contact portion (13);
a movable contactor supporting conductor (9) disposed between both the contact portions; and
a movable contactor (5) slidably supported by the movable contactor supporting conductor to be connected or separated to/from both the contact portions, in a gas container (1) to which insulation gas is filled,
wherein the gas container houses the main bus-bar conductor and has two facing openings (1a, 1b) in a longitudinal direction of the main bus-bar conductor and at least one opening (1c, 1d) in a direction almost orthogonal to the longitudinal direction of the main bus-bar conductor;
wherein a disconnector switch fixed side unit (6) is mounted to one of the two facing openings provided in the gas container, the disconnector switch fixed side unit having a first insulation spacer (2a) and the main bus-bar conductor whose one end is fixed to the first insulation spacer, in a center portion of the main bus-bar conductor, the disconnector switch fixed contact portion in a direction orthogonal to the longitudinal direction of the main bus-bar conductor being formed, and in the other end portion of the main bus-bar conductor a connection portion to another conductor being formed;
wherein an earthing switch fixed side unit (15) is mounted to a mounting surface side of the disconnector switch fixed side unit of the gas container, the earthing switch fixed side unit having the earthing switch fixed contact portion and an external lead-out terminal (14) to connect the earthing switch fixed contact portion to the outside; and
wherein a movable contactor supporting unit (10) is mounted to the opening provided in a direction almost orthogonal to the longitudinal direction of the main bus-bar conductor of the gas container, the movable contactor supporting unit having a second insulation spacer (2c), the movable contactor supporting conductor fixed to the second insulation spacer and disposed to face the disconnector switch fixed contact portion, and the movable contactor slidably supported by the movable contactor supporting conductor to be connected or separated to/from either one of the disconnector switch fixed contact portion and the earthing switch fixed contact portion, **characterized in that**
a detachable unit (8) is mounted to the other facing opening (1b) of the gas container, the detachable unit having a third insulation spacer (2b) mounted to be able to move forward and backward in an internal-direction of the gas container, and a detachable conductor (7) fixed to the third insulation spacer and connectable or separatable to/from the connection portion formed in the other end portion of the main bus-bar conductor.

2. The gas-insulated switchgear as set forth in claim 1,
wherein a mounting surface of the disconnector switch fixed side unit to the gas container and a mounting surface of the earthing switch fixed side unit to the gas container are the same mounting surface or parallel mounting surfaces.

3. The gas-insulated switchgear as set forth in claim 1 or 2,
wherein the detachable unit is disposed on the opposite side of the earthing switch fixed side unit.

4. The gas-insulated switchgear as set forth in claim 1, 2 or 3, wherein a center axis (11) of the second insulation spacer constituting the movable contactor supporting unit is disposed to be off-centered toward a side of a detachable unit as seen from a center axis of the gas container.

5. The gas-insulated switchgear as set forth in claim 1, 2, 3 or 4, wherein the external lead-out terminal is lead out per each phase.

6. An assembly method of a gas-insulated switchgear (100) having a gas container (1) which accommodates a three-position disconnector switch/earthing switch constituted with a main bus-bar conductor (3), a disconnector switch fixed contact portion (4), an earthing switch fixed contact portion (13), a movable contactor supporting conductor (9) disposed between both the contact portions, and a movable contactor (5) slidably supported by the movable contactor supporting conductor to be connected or separated to/from both the contact portions, the gas container having two facing openings (1a, 1b) in a longitudinal direction of the main bus-bar conductor and at least one opening (1c, 1d) in a direction almost orthogonal to a longitudinal direction of the main bus-bar conductor, and insulation gas being filled to the gas container, the assembly method, comprising:
the step of mounting a disconnector switch fixed side unit (6) in which a disconnector switch fixed side unit is mounted to one of two facing openings provided in the gas container the disconnector switch fixed side unit having a first insulation spacer (2a) and one end of the main bus-bar conductor is fixed to the first insulation spacer, in a center portion of the main bus-bar conductor, the disconnector switch fixed contact portion in a direction orthogonal to the longitudinal direction of the main bus-bar conductor being formed, and in the other end portion of the main bus-bar conductor a connection portion to another conductor being formed;
the step of mounting an earthing switch fixed side unit (5) in which an earthing switch fixed side unit is mounted to a mounting surface side of the disconnector switch fixed side unit of the gas container, the earthing switch fixed side unit having the earthing switch fixed contact portion and an external lead-out terminal to connect the earthing switch fixed contact portion to the outside; and
the step of mounting a movable contactor supporting unit (10) in which a movable contactor supporting unit is mounted to the opening provided in the direction almost orthogonal to the longitudinal direction of the main bus-bar conductor of the gas container, the movable contactor supporting unit having a second insulation spacer (2c), the movable contactor supporting conductor fixed to the second insulation spacer and disposed to face the disconnector switch fixed contact portion, and the movable contactor slidably supported by the movable contactor supporting conductor to be connected or separated to/from either one of the disconnector switch fixed contact portion and the earthing switch fixed contact portion; **characterized in that** the assembly method further comprises
the step of mounting a detachable unit (8) in which a detachable unit is mounted to the other facing opening (1b) of the gas container, the detachable unit having a third insulation spacer (2b) mounted to be able to move forward and backward in an internal direction of the gas container and a detachable conductor fixed to the third insulation spacer and is connectable or separatable to/from the connection portion formed in the other end portion of the main bus-bar conductor.

7. The assembly method of the gas-insulated switchgear as set forth in claim 6,
wherein, in the movable contactor supporting unit mounting, a drive mechanism of the movable contactor is assembled by using the opening (1b) of the gas container which is the mounting surface of the detachable unit.

8. The assembly method of the gas-insulated switchgear as set forth in claim 6 or 7,
wherein, in the movable contactor supporting unit mounting after the disconnector switch fixed side unit mounting and the earthing switch fixed side unit mounting, the movable contactor supporting unit is mounted to the gas container and a centering adjustment operation of axes of the disconnector switch fixed contact portion, the earthing switch fixed contact portion and the movable contactor is performed.

## Patentansprüche

1. Gasisolierte Schaltanlage (100), die einen Hauptbusschienenleiter (3) aufnimmt und einen Dreistellungs-Trennschalter/Erdungsschalter aufnimmt, mit:
einem festen Kontaktabschnitt des Trennschalters (4);
einem festen Kontaktabschnitt des Erdungsschalters (13);
einem beweglichen Kontaktstützleiter (9), der zwischen den beiden Kontaktabschnitten angeordnet ist; und
einem beweglichen Kontakt (5), der so verschiebbar durch den beweglichen Kontaktstützleiter in einem Gasbehälter (1), in den ein Isolationsgas gefüllt ist, gehalten ist, dass er verbunden ist mit oder getrennt ist von den beiden Kontaktabschnitten,
wobei der Gasbehälter den Hauptbusschienenleiter aufnimmt und zwei einander zugewandte Öffnungen (1a, 1b) in einer Längsrichtung des Hauptbusschienenleiters und zumindest eine Öffnung (1c, 1d) in einer Richtung nahezu senkrecht zu der Längsrichtung des Hauptbusschienenleiters aufweist;
wobei eine feste Seiteneinheit des Trennschalters (6) an eine der beiden einander zugewandten Öffnungen, die in dem Gasbehälter vorgesehen sind, angebracht ist, die feste Seiteneinheit des Trennschalters einen ersten Isolationsabstandshalter (2a) und den Hauptbusschienenleiter aufweist, dessen eines Ende an dem ersten Isolationsabstandshalter befestigt ist, der feste Kontaktabschnitt des Trennschalters in einem Mittelabschnitt des Hauptsammelschienenleiters in einer Richtung senkrecht zu der Längsrichtung des Hauptsammelschienenleiters ausgebildet ist und an dem anderen Endabschnitt des Hauptschienenleiters ein Leitungsabschnitt zu einem anderen Leiter ausgebildet ist;
wobei eine feste Seiteneinheit des Erdungsschalters (15) an einer Anbringflächenseite der festen Seiteneinheit des Trennschalters des Gasbehälters angebracht ist, die feste Seiteneinheit des Erdungsschalters den festen Kontaktabschnitt des Erdungsschalters und einen externen Ausführanschluss (14) zum Verbinden des festen Kontaktabschnitts des Erdungsschalters mit dem Äußeren aufweist; und
wobei eine Halteeinheit des beweglichen Kontakts (10) an der Öffnung angebracht ist, die in einer Richtung nahezu senkrecht zu der Längsrichtung des Hauptbusschienenleiters des Gasbehälters vorgesehen ist, die Halteeinheit des beweglichen Kontakts einen zweiten Isolationsabstandshalter (2c) aufweist, der Kontaktstützleiter des beweglichen Kontakts an dem zweiten Isolationsabstandshalter befestigt ist und angeordnet ist, um dem festen Kontaktabschnitt des Trennschalters zugewandt zu sein und der bewegliche Kontakt, der verschiebbar durch den beweglichen Kontaktstützleiter gehalten wird, um mit dem festen Kontaktabschnitt des Trennschalters oder dem festen Kontaktabschnitt des Erdungsschalters verbunden oder davon getrennt zu sein, **dadurch gekennzeichnet, dass**
eine lösbare Einheit (8) an der anderen der zugewandten Öffnungen (1b) des Gasbehälters angebracht ist, die lösbare Einheit einen dritten Isolationsabstandshalter (2b), der angebracht ist, um in der Lage zu sein, sich in einer Innenrichtung des Gasbehälters vor und zurück zu bewegen und einen lösbarer Leiter (7) aufweist, der an dem dritten Isolationsabstandshalter befestigt ist und mit/von dem, an dem anderen Endabschnitt des Hauptbusschienenleiters ausgebildeten Verbindungsabschnitts verbindbar oder trennbar ist.

2. Gasisolierte Schaltanlage wie in Anspruch 1, wobei
eine Anbringfläche der festen Seiteneinheit des Trennschalters an dem Gasbehälter und eine Anbringfläche der festen Seiteneinheit des Erdungsschalters an dem Gasbehälter die gleiche Anbringfläche oder parallele Anbringflächen sind.

3. Gasisolierte Schaltanlage wie in Anspruch 1 oder 2, wobei
die lösbare Einheit an der gegenüberliegenden Seite der festen Seiteneinheit des Erdungsschalters angeordnet ist.

4. Gasisolierte Schaltanlage wie in Anspruch 1, 2 oder 3, wobei
eine Mittelachse (11) des zweiten Isolationsabstandshalters, der die Halteeinheit des beweglichen Kontakts ausbildet, betrachtet von einer Mittelachse des Gasbehälters, von der Mitte versetzt, zu einer Seite einer lösbaren Einrichtung hin angeordnet ist.

5. Gasisolierte Schaltanlage wie in Anspruch 1, 2, 3 oder 4, wobei
der externe Ausführanschluss für jede Phase ausgeführt ist.

6. Montageverfahren einer gasisolierten Schaltanlage (100) mit einem Gasbehälter (1), der einen Dreistellungs-Trennschalter/Erdungsschalter aufnimmt, der ausgebildet ist mit einem Hauptbusschienenleiter (3), einem festen Kontaktabschnitt eines Trennschalters (4); einem festen Kontaktabschnitt eines Erdungsschalters (13); einem beweglichen Kontaktstützleiter (9), der zwischen den beiden Kontaktabschnitten angeordnet ist; und einem beweglichen Kontakt (5), der so verschiebbar durch den beweglichen Kontaktstützleiter gehalten ist, dass er verbunden wird mit oder getrennt wird von den beiden Kontaktabschnitten, der Gasbehälter zwei einander zugewandte Öffnungen (1a, 1b) in einer Längsrichtung des Hauptbusschienenleiters und zumindest eine Öffnung (1c, 1d) in einer Richtung nahezu senkrecht zu der Längsrichtung des Hauptbusschienenleiters aufweist und wobei Gas in den in den Gasbehälter gefüllt ist; wobei das Montageverfahren aufweist:
einen Schritt des Anbringens einer festen Seiteneinheit eines Trennschalters (6) in dem eine feste Seiteneinheit eines Trennschalters an eine der zwei zugewandten Öffnungen, die in dem Gasbehälter vorgesehen sind, angebracht wird, wobei die feste Seiteneinheit des Trennschalters einen ersten Isolationsabstandshalter (2a) aufweist und ein Ende des Hauptbusschienenleiters an dem ersten Isolationsabstandshalter befestigt ist, der feste Kontaktabschnitt des Trennschalters in einem Mittenabschnitt des Hauptsammelschienenleiters in einer Richtung senkrecht zu der Längsrichtung des Hauptbusschienenleiters ausgebildet ist und an dem anderen Endabschnitt des Hauptsammelschienenleiters ein Verbindungsabschnitt zu einem anderen Leiter ausgebildet ist;
den Schritt des Anbringens einer festen Seiteneinheit eines Erdungsschalters (5) in dem eine feste Seiteneinheit eines Erdungsschalters an einer Anbringflächenseite der festen Seiteneinheit des Trennschalters des Gasbehälters angebracht wird, wobei die feste Seiteneinheit des Erdungsschalters, den festen Kontaktabschnitt des Erdungsschalters und einen externen Ausführanschluss zum Verbinden des festen Kontaktabschnitts des Erdungsschalters mit dem Äußeren aufweist; und
den Schritt des Anbringens einer Halteeinheit eines beweglichen Kontakts (10) in dem eine Halteeinheit des beweglichen Kontakts an die in der Richtung nahezu senkrecht zu der Längsrichtung des Hauptbusschienenleiters des Gasbehälters vorgesehenen Öffnung angebracht wird, die Halteeinheit des beweglichen Kontakts einen zweiten Isolationsabstandshalter (2c) aufweist, der bewegliche Kontaktstützleiter an dem zweiten Isolationsabstandshalter befestigt ist und angeordnet ist, um den festen Kontaktabschnitt des Trennschalters zugewandt zu sein und der durch den beweglichen Kontaktstützleiter verschiebbar gehaltene, bewegliche Kontakt mit dem festen Kontaktabschnitt des Trennschalters oder dem festen Kontaktanschluss des Erdungsschalters verbunden oder davon getrennt zu sein;
**dadurch gekennzeichnet, dass** das Montageverfahren ferner aufweist:
den Schritt des Anbringens einer lösbaren Einheit (8) in dem eine lösbare Einheit an der anderen der zugewandten Öffnungen (1b) des Gasbehälters angebracht wird, die lösbare Einheit einen dritten Isolationsabstandshalter (2b), der angebracht ist, um in der Lage zu sein, sich in einer Innenrichtung des Gasbehälters vor und zurück zu bewegen und einen lösbaren Leiter aufweist, der an dem dritten Isolationsabstandshalter befestigt ist und mit/von dem, an dem anderen Endabschnitt des Hauptbusschienenleiters ausgebildeten Verbindungsabschnitt verbindbar oder trennbar ist.

7. Montageverfahren für die gasisolierte Schaltanlage wie in Anspruch 6, wobei
während des Anbringens der Halteeinheit des beweglichen Kontakts ein Antriebsmechanismus des beweglichen Kontakts mittels der Öffnung (1b) des Gasbehälters, welche die Anbringfläche der lösbaren Einheit ist, montiert wird.

8. Montageverfahren der gasisolierten Schaltanlage, wie in Anspruch 6 oder 7, wobei
während des Anbringens der Halteeinheit des beweglichen Kontakts nach dem Anbringen der festen Seiteneinheit des Trennschalters und dem Anbringen der festen Seiteneinheit des Erdungsschalters, die Halteeinheit des beweglichen Kontakts an dem Gasbehälter angebracht wird und ein Zentrierungseinstellvorgang von Achsen des festen Kontaktabschnitts des Trennschalters, des festen Kontaktabschnitts des Erdungsschalters und des beweglichen Kontakts durchgeführt wird.

## Revendications

1. Appareillage de commutation à isolation gazeuse (100) contenant un conducteur principal de barre omnibus (3) et recevant un commutateur de déconnexion/commutateur de mise à la terre à trois positions, comprenant :
une partie de contact fixe du commutateur de déconnexion (4) ;
une partie de contact fixe du commutateur de mise à la terre (13) ;
un conducteur support de contacteur mobile (9) disposé entre les deux parties de contact ; et
un contacteur mobile (5) supporté de manière coulissante par le conducteur support de contacteur mobile pour être connecté ou séparé aux/des deux parties de contact, dans un récipient de gaz (1) rempli d'un gaz d'isolation,
dans lequel le récipient de gaz contient le conducteur principal de barre omnibus et comporte deux ouvertures en vis-à-vis (1a, 1b) dans la direction longitudinale du conducteur principal de barre omnibus et au moins une ouverture (1c, 1d) dans une direction pratiquement orthogonale par rapport à la direction longitudinale du conducteur principal de barre omnibus ;
dans lequel une unité côté fixe du commutateur de déconnexion (6) est montée sur l'une des deux ouvertures en vis-à-vis prévues dans le récipient de gaz, l'unité côté fixe du commutateur de déconnexion comportant un premier élément d'écartement d'isolation (2a) et le conducteur principal de barre omnibus dont une extrémité est fixée au premier élément d'écartement d'isolation, dans la partie centrale du conducteur principal de barre omnibus, la partie de contact fixe du commutateur de déconnexion étant formée dans une direction orthogonale par rapport à la direction longitudinale du conducteur principal de barre omnibus, et une partie de connexion à un autre conducteur étant formée dans l'autre partie d'extrémité du conducteur principal de barre omnibus ;
dans lequel une unité côté fixe du commutateur de mise à la terre (15) est montée sur le côté surface de montage de l'unité côté fixe du commutateur de déconnexion du récipient de gaz, l'unité côté fixe du commutateur de mise à la terre comportant la partie de contact fixe du commutateur de mise à la terre et une borne de sortie extérieure (14) pour connecter vers l'extérieur la partie de contact fixe de connecteur de mise à la terre ; et
dans lequel une unité support de contacteur mobile (10) est montée sur l'ouverture prévue dans une direction presque orthogonale par rapport à la direction longitudinale du conducteur principal de barre omnibus du récipient de gaz, l'unité support de contacteur mobile comportant un deuxième élément d'écartement d'isolation (2c), le conducteur support de contacteur mobile étant fixé au deuxième élément d'écartement d'isolation et disposé de manière à être tourné vers la partie de contact fixe du commutateur de déconnexion, et le contacteur mobile étant supporté de manière coulissante par le conducteur support de contacteur mobile pour être connecté ou séparé à/de l'une ou l'autre de la partie de contact fixe du commutateur de déconnexion et la partie de contact fixe du commutateur de mise à la terre, **caractérisé en ce que**
une unité amovible (8) est montée sur l'autre ouverture en vis-à-vis (1b) du récipient de gaz, l'unité amovible comportant un troisième élément d'écartement d'isolation (2b) monté de manière à pouvoir se déplacer vers l'avant et vers l'arrière dans la direction interne du récipient de gaz, et un conducteur amovible (7) fixé au troisième élément d'écartement d'isolation et pouvant être connecté ou séparé à/de la partie de connexion formée dans l'autre partie d'extrémité du conducteur principal de barre omnibus.

2. Appareillage de commutation à isolation gazeuse selon la revendication 1,
dans lequel une surface de montage de l'unité côté fixe du commutateur de déconnexion sur le récipient de gaz et une surface de montage de l'unité côté fixe du commutateur de mise à la terre sur le récipient de gaz sont la même surface de montage ou des surfaces de montage parallèles.

3. Appareillage de commutation à isolation gazeuse selon la revendication 1 ou 2,
dans lequel l'unité amovible est disposée sur le côté opposé de l'unité côté fixe du commutateur de mise à la terre.

4. Appareillage de commutation à isolation gazeuse selon la revendication 1, 2 ou 3, dans lequel l'axe central (11) du deuxième élément d'écartement d'isolation constituant l'unité support de contacteur mobile est disposé de manière à être excentré vers un côté de l'unité amovible, vu de l'axe central du récipient de gaz.

5. Appareillage de commutation à isolation gazeuse selon la revendication 1, 2, 3 ou 4, dans lequel la borne de sortie externe est sortie pour chaque phase.

6. Procédé d'assemblage d'un appareillage de commutation à isolation gazeuse (100) comportant un récipient de gaz (1) recevant un commutateur de déconnexion/commutateur de mise à la terre à trois positions avec un conducteur principal de barre omnibus (3), une partie de contact fixe du commutateur de déconnexion (4), une partie de contact fixe du commutateur de mise à la terre (13), un conducteur support de contacteur mobile (9) disposé entre les deux parties de contact, et un contacteur mobile (5) supporté de manière coulissante par le conducteur support de contacteur mobile pour être connecté ou séparé aux/des deux parties de contact, le récipient de gaz comportant deux ouvertures en vis-à-vis (1a, 1b) dans la direction longitudinale du conducteur principal de barre omnibus et au moins une ouverture (1c, 1d) dans une direction pratiquement orthogonale par rapport à la direction longitudinale du conducteur principal de barre omnibus, et le récipient de gaz étant rempli d'un gaz d'isolation, le procédé d'assemblage comprenant :
l'étape de montage d'une unité côté fixe du commutateur de déconnexion (6) dans laquelle une unité côté fixe du commutateur de déconnexion est montée sur l'une des deux ouvertures en vis-à-vis prévues dans le récipient de gaz, l'unité côté fixe du commutateur de déconnexion comportant un premier élément d'écartement d'isolation (2a) et une extrémité du conducteur principal de barre omnibus étant fixée au premier élément d'écartement d'isolation, dans la partie centrale du conducteur principal de barre omnibus, la partie de contact fixe du commutateur de déconnexion étant formée dans une direction orthogonale par rapport à la direction longitudinale du conducteur principal de barre omnibus, et une partie de connexion à un autre conducteur étant formée dans l'autre partie d'extrémité du conducteur principal de barre omnibus; ,
l'étape de montage d'une unité côté fixe du commutateur de mise à la terre (5) dans laquelle une unité côté fixe du commutateur de mise à la terre est montée sur le côté surface de montage de l'unité côté fixe du commutateur de déconnexion du récipient de gaz, l'unité côté fixe du commutateur de mise à la terre comportant la partie de contact fixe du commutateur de mise à la terre et une borne de sortie extérieure pour connecter vers l'extérieur la partie de contact fixe de connecteur de mise à la terre ; et
l'étape de montage d'une unité support de contacteur mobile (10) dans laquelle une unité support de contacteur mobile est montée sur l'ouverture prévue dans la direction presque orthogonale par rapport à la direction longitudinale du conducteur principal de barre omnibus du récipient de gaz, l'unité support de contacteur mobile comportant un deuxième élément d'écartement d'isolation (2c), le conducteur support de contacteur mobile étant fixé au deuxième élément d'écartement d'isolation et disposé de manière à être tourné vers la partie de contact fixe du commutateur de déconnexion, et le contacteur mobile étant supporté de manière coulissante par le conducteur support de contacteur mobile pour être connecté ou séparé à/de l'une ou l'autre de la partie de contact fixe du commutateur de déconnexion et la partie de contact fixe du commutateur de mise à la terre, **caractérisé en ce que** le procédé d'assemblage comprend en outre
l'étape de montage d'une unité amovible (8) dans laquelle une unité amovible est montée sur l'autre ouverture en vis-à-vis (1b) du récipient de gaz, l'unité amovible comportant un troisième élément d'écartement d'isolation (2b) monté de manière à pouvoir se déplacer vers l'avant et vers l'arrière dans la direction interne du récipient de gaz, et un conducteur amovible fixé au troisième élément d'écartement d'isolation et pouvant être connecté ou séparé à/de la partie de connexion formée dans l'autre partie d'extrémité du conducteur principal de barre omnibus.

7. Procédé d'assemblage de l'appareillage de commutation à isolation gazeuse selon la revendication 6,
dans lequel, dans le montage de l'unité support de contacteur mobile, un mécanisme d'entraînement du contacteur mobile est assemblé en utilisant l'ouverture (1b) du récipient de gaz qui est la surface de montage de l'unité amovible.

8. Procédé d'assemblage de l'appareillage de commutation à isolation gazeuse selon la revendication 6 ou 7,
dans lequel, dans le montage de l'unité support de contacteur mobile, après le montage de l'unité côté fixe du commutateur de déconnexion et le montage de l'unité côté fixe du commutateur de mise à la terre, l'unité support de contacteur mobile est montée sur le récipient de gaz et une opération de réglage de centrage des axes de la partie de contact fixe du commutateur de déconnexion, de la partie de contact fixe du commutateur de mise à la terre et du contacteur mobile est effectuée.
